# EUROPEAN PATENT APPLICATION

(11) **EP 4 456 473 A1**
(43) Date of publication of application: **30.10.2024**
(21) Application number: 22924866.1
(22) Date of filing: 07.02.2022
(51) Int. Cl.: H04L 7/00

(54) **COMMUNICATION SYSTEM, COMMUNICATION DEVICE, AND COMMUNICATION METHOD**

(71) Applicant: Kabushiki Kaisha Yaskawa Denki, Kitakyushu-shi, Fukuoka 806-0004 (JP)
(72) Inventor: FUJINO Kazuo, Kitakyushu-shi, Fukuoka 806-0004 (JP); YUBA Tadasuke, Kitakyushu-shi, Fukuoka 806-0004 (JP); MORIWAKA Ryota, Kitakyushu-shi, Fukuoka 806-0004 (JP); KOBAYASHI Kazutoshi, Kitakyushu-shi, Fukuoka 806-0004 (JP); MINAMIDA Yuki, Kitakyushu-shi, Fukuoka 806-0004 (JP); SHIMODOME Ryo, Kitakyushu-shi, Fukuoka 806-0004 (JP); MATAKA Mikio, Kitakyushu-shi, Fukuoka 806-0004 (JP)
(74) Representative: Viering, Jentschura & Partner mbB Patent- und Rechtsanwälte
(86) International application number: PCT/JP2022/004621
(87) International publication number: WO 2023/148956

(57) **Abstract**

A communication system 1 is a system that performs wireless communication between a first application and a second application. The communication system 1 includes: a first communication device 200 that performs first wired communication with a first application; and a second communication device 400 that performs second wired communication with a second application and performs wireless communication with the first communication device 200. The first communication device 200 includes a first time acquisition unit 215 that acquires a first time from the first application. The second communication device 400 includes: a second time generation unit 416 that generates a second time synchronized with the first time; and an interrupt output unit 417 that periodically outputs, to the second application, an interrupt signal synchronized with the second time.

## Description

### Technical Field

The present disclosure relates to a communication system, a communication device, and a communication method.

### Background Art

Patent Document 1 discloses a machine control system including one or more machines, one or more controllers that respectively control the one or more machines, and a communication server that communicates with the one or more controllers via a wired communication network and communicates with the one or more machines via a wireless communication network. Each of the one or more controllers includes a motion module that executes a motion program in a control cycle and generates a machine command for a corresponding machine, an addition unit that adds first cycle information to the machine command, and a synchronous communication unit that transmits the machine command to the communication server. Each of the one or more machines includes a terminal communication unit that receives the machine command from the communication server, and a machine-side timing adjustment unit that stores the machine command received by the terminal communication unit and calls the machine command in the control cycle corresponding to the first cycle information added to the machine instruction.

### Citation List

### Patent Literature

[Patent Document 1] Japanese Patent No. 6916399

### Summary of Invention

### Technical Problem

The present disclosure provides a system that is effective for easily synchronizing applications that communicate with each other.

### Solution to Problem

A communication system according to an aspect of the present disclosure is a communication system configured to perform wireless communication between a first application and a second application, the system including: a first communication device configured to perform first wired communication with the first application; and a second communication device configured to perform second wired communication with the second application and to perform wireless communication with the first communication device. The first communication device includes a first time acquisition unit configured to acquire a first time from the first application. The second communication device includes: a second time generation unit configured to generate a second time synchronized with the first time; and an interrupt output unit configured to periodically output, to the second application, an interrupt signal synchronized with the second time.

A communication device according to another aspect of the present disclosure is a device configured to perform wireless communication with a partner device configured to perform first wired communication with a first application, and to transmit, to a second application through second wireless communication, information acquired from the partner device through wireless communication. The communication device includes: a second time generation unit configured to generate a second time synchronized with a first time acquired by the partner device from the first application; and an interrupt output unit configured to periodically output, to the second application, an interrupt signal synchronized with the second time.

A communication method according to still another aspect of the present disclosure includes: performing wireless communication with a partner device configured to perform first wired communication with a first application; transmitting, to a second application through second wired communication, information acquired from the partner device through the wireless communication; generating a second time synchronized with a first time acquired from the first application by the partner device; and periodically outputting, to the second application, an interrupt signal synchronized with the second time.

### Advantageous Effects of Invention

According to the present disclosure, a system that is effective for easily synchronizing applications that communicate with each other is provided.

### Brief Description of Drawings

FIG. 1 is a schematic diagram illustrating an example communication system.
FIG. 2 is a schematic diagram illustrating an example configuration of a robot.
FIG. 3 is a block diagram illustrating an example functional configuration of a controller and a local controller.
FIG. 4 is a block diagram illustrating an example functional configuration of a first communication device and a second communication device.
FIG. 5 is a block diagram illustrating a modification of the second communication device.
FIG. 6 is a block diagram illustrating an example hardware configuration of the controller and the first communication device.
FIG. 7 is a block diagram illustrating an example hardware configuration of the second communication device and the local controller.
FIG. 8 is a flowchart illustrating an example synchronization procedure of a communication reference time.
FIG. 9 is a flowchart illustrating an example synchronization procedure of a second time.
FIG. 10 is a flowchart illustrating an example interrupt output procedure.
FIG. 11 is a flowchart illustrating an example synchronization procedure of a local time.
FIG. 12 is a flowchart illustrating an example host control procedure.
FIG. 13 is a flowchart illustrating an example local control procedure.

### Description of Embodiments

Hereinafter, an embodiment will be described in detail with reference to the drawings. In the description, the same elements or elements having the same function is denoted by the same symbol, and redundant description will be omitted.

### Communication System

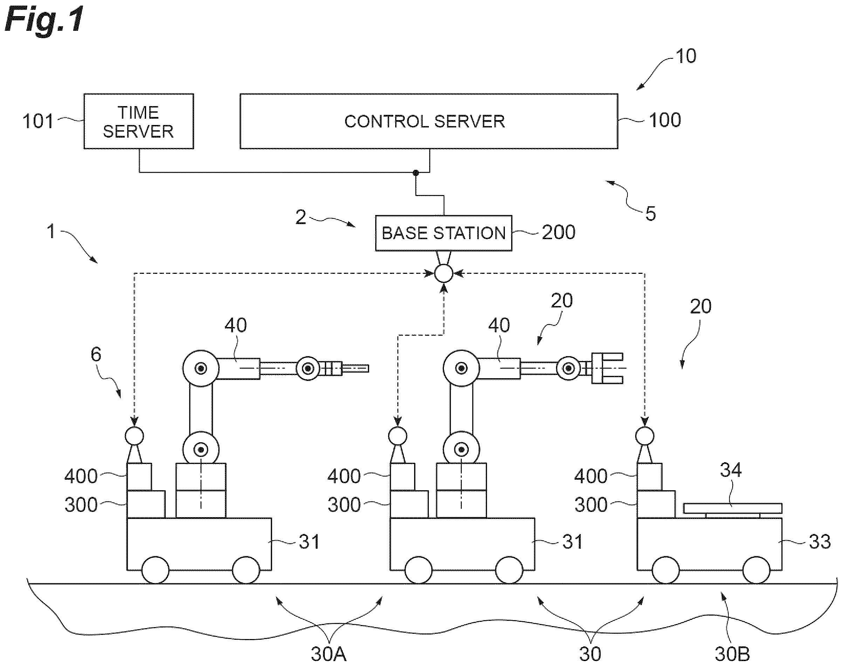

A communication system 1 illustrated in FIG. 1 is a system configured to perform wireless communication between one application (first application) and another application (second application).

The first application performs first processing including transmission and reception of information to and from the second application in synchronization with a first application time. Here, the "time" is numerical information indicating the current time by elapsed time from a past reference time point. The same applies to the following.

As an example, the first application repeatedly performs the first processing at a timing when the first application time satisfies a predetermined first processing condition. The first processing condition may be that the first application time becomes a multiple of a predetermined first period. In this case, the first application repeatedly performs the first processing at intervals of the first period.

The second application performs second processing including transmission and reception of information to and from the first application in synchronization with the first application time. As an example, the second application repeatedly performs the second processing at a timing when the first application time satisfies a predetermined second processing condition. The second processing condition may be that the first application time becomes a multiple of a predetermined second period. In this case, the second application repeatedly performs the second processing at intervals of the second period.

The communication system 1 includes a first communication device 200 and a second communication device 400. The first communication device 200 performs first wired communication with the first application. The second communication device 400 performs second wired communication with the second application and performs wireless communication with the first communication device.

As an example of a system including a first application, a second application, and the communication system 1, FIG. 1 illustrates a control system 10. The control system 10 includes a controller 100, a local controller 300, the first communication device 200, and the second communication device 400. The controller 100 performs the first wired communication with the first communication device 200 as the first application. The local controller 300 performs the second wired communication with the second communication device 400 as the second application.

The controller 100 generates a command data set for a machine 30 (local apparatus). The first communication device 200 receives the command data set from the controller 100 through the first wired communication and transmits the received command data set to the second communication device 400 through the wireless communication. The local controller 300 receives, from the second communication device 400 through second wired communication, the command data set received by the second communication device 400 through wireless communication, and controls the machine 30 based on the received command data set.

The local controller 300 may acquire, from the machine 30, a feedback data set indicating an operation result of the machine 30. The second communication device 400 may receive the feedback data set from the local controller 300 through the second wired communication, and may transmit the received feedback data set to the first communication device 200 through the wireless communication. The controller 100 may receive, from the first communication device 200 through the first wired communication, the command data set received by the first communication device 200 through the wireless communication, and may generate a next command data set based on the received feedback data set.

The control system 10 may include a plurality of local controllers 300 configured to operate a plurality of machines 30, respectively. The communication system 1 may include a plurality of second communication devices 400 respectively corresponding to the plurality of local controllers 300. The first communication device 200 performs wireless communication with each of the plurality of second communication devices 400.

The machine 30 is a machine that implements operations. The type of the machine 30 is not particularly limited, but two types of machines 30A, 30B are illustrated in FIG. 1. The machine 30A is a mobile robot that works on a workpiece while moving. For example, the machine 30A includes an automated guided vehicle 31 and a robot 40. The automated guided vehicle 31 is driven to move by the local controller 300.

The robot 40 is mounted on top of the automated guided vehicle 31. The robot 40 is driven by the local controller 300 to perform works such as conveying, machining, and assembling on the workpiece.

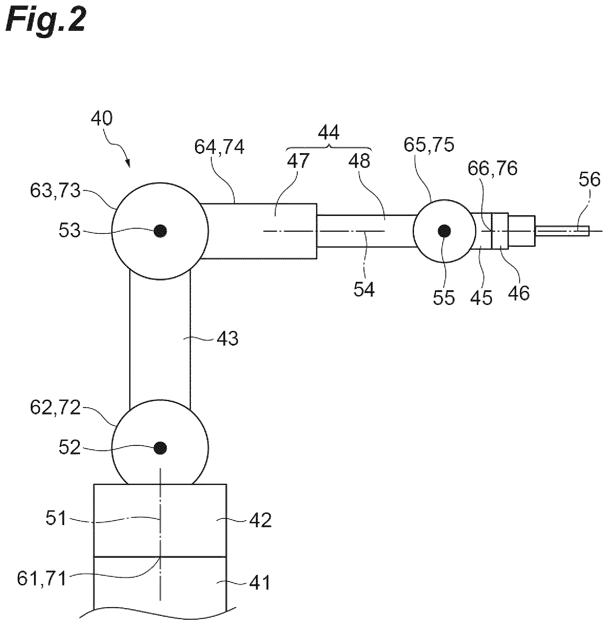

The robot 40 is, for example, a vertical articulated industrial robot. As illustrated in FIG. 2, the robot 40 includes a base 41, a pivoting portion 42, a first arm 43, a second arm 44, a wrist portion 45, and a tip portion 46. The base 41 is mounted on top of the automated guided vehicle 31. The pivoting portion 42 is mounted on the base 41 so as to be rotatable about a vertical axis 51. For example, the robot 40 includes a joint 61 that attaches the pivoting portion 42 to the base 41 so as to be rotatable about the axis 51. The first arm 43 is connected to the pivoting portion 42 so as to be rotatable about an axis 52 intersecting (for example, orthogonal to) the axis 51. For example, the robot 40 includes a joint 62 that connects the first arm 43 to the pivoting portion 42 so as to be rotatable about the axis 52. Intersecting includes being skew, such as so-called three-dimensional intersection. The same applies to the following. The first arm 43 extends from the pivoting portion 42 along a direction that intersects (for example, is orthogonal to) the axis 52.

The second arm 44 is connected to an end of the first arm 43 so as to be rotatable about an axis 53 parallel to the axis 52. For example, the robot 40 includes a joint 63 that connects the second arm 44 to the first arm 43 so as to be rotatable about the axis 53. The second arm 44 includes an arm base 47 that extends from the end of the first arm 43 along one direction that intersects (for example, is orthogonal to) the axis 53, and an arm end 48 that further extends from an end of the arm base 47 along the same one direction. The arm end 48 is rotatable about an axis 54 relative to the arm base 47. The axis 54 intersects (for example, is orthogonal to) the axis 53. For example, the robot 40 includes a joint 64 that connects the arm end 48 to the arm base 47 so as to be rotatable about the axis 54.

The wrist portion 45 is connected to an end of the arm end 48 so as to be rotatable about an axis 55 that intersects (for example, is orthogonal to) the axis 54. For example, the robot 40 includes a joint 65 that connects the wrist portion 45 to the arm end 48 so as to be rotatable about the axis 55. The wrist portion 45 extends from an end of the arm end 48 along a direction that intersects (for example, is perpendicular to) the axis 55. The tip portion 46 is connected to an end of the axis 55 so as to be rotatable about an axis 56 that intersects (for example, is orthogonal to) the wrist portion 45. For example, the robot 40 includes a joint 66 that connects the tip portion 46 to the wrist portion 45 so as to be rotatable about the axis 56. An end effector is provided on the tip portion 46. Specific examples of the end effector include a hand that grips a workpiece and a work tool that performs machining and assembly on a workpiece.

Actuators 71, 72, 73, 74, 75, 76 drive joints 61, 62, 63, 64, 65, 66. Each of the actuators 71, 72, 73, 74, 75, 76 includes, for example, an electric motor and a transmission unit (for example, a reduction gear) that transmits the power of the electric motor to the joints 61, 62, 63, 64, 65, 66. For example, the actuator 71 drives the joint 61 to rotate the pivoting portion 42 around the axis 51. The actuator 72 drives the joint 62 to rotate the first arm 43 around the axis 52. The actuator 73 drives the joint 63 to rotate the second arm 44 around the axis 53. The actuator 74 drives the joint 64 to rotate the arm end 48 around the axis 54. The actuator 75 drives the joint 65 to rotate the wrist portion 45 around the axis 55. The actuator 76 drives the joint 66 to rotate the tip portion 46 around the axis 56.

Referring back to FIG. 1, the machine 30B is an automated guided vehicle that conveys a conveyance target object such as a workpiece. The machine 30B includes an automated guided vehicle 33 and a loading table 34. The automated guided vehicle 33 is driven to move by the local controller 300. The loading table 34 is provided on the automated guided vehicle 33 and supports the conveyance target object.

In the above configuration, the controller 100 performs host processing (first processing) including generation of the command data set in synchronization with a host time (first application time). For example, the controller 100 generates the command data set based on the feedback data set and transmits the generated command data set to the first communication device 200 every time the host time becomes a multiple of a predetermined host control period (first period).

The local controller 300 performs local processing (second processing) including controlling the machine 30 based on the command data set in synchronization with the host time. For example, the local controller 300 controls the machine 30 based on the command data set, acquires the feedback data set from the machine 30, and transmits the acquired feedback data set to the second communication device 400 every time the host time becomes a multiple of a predetermined local control period (second period). The local control period may be the same as the host control period.

The local controller 300 may generate a local time synchronized with the host time and perform the local processing in synchronization with the local time. For example, the local controller 300 may control the machine 30 based on the command data set and acquire the feedback data set from the machine 30 every time the local time becomes a multiple of the local control period.

The controller 100 may add command timing information defining the read timing of the command data set (hereinafter referred to as "command timing") to the command data set and transmit the command data set to the first communication device 200. The local controller 300 receives and holds the command data set from the second communication device 400, and reads the command data set at the command timing based on the local time and the command timing information. The local controller 300 controls the machine 30 based on the command data set read at the command timing.

The command timing information may be information that indirectly specifies the command timing. For example, the command timing information may be information indicating a command reference timing before the timing at which the controller 100 transmits the command data set to the first communication device 200. If the delay time from the command reference timing to the command timing is defined in advance, the command timing is indirectly defined by the command reference timing. Specific examples of the command reference timing include a timing at which the controller 100 generates the command data set.

The local controller 300 may add feedback timing information defining the read timing of the feedback data set (hereinafter referred to as "feedback timing") to the feedback data set and transmit the feedback data set to the second communication device 400. The controller 100 receives and holds the feedback data set from the first communication device 200, and reads the feedback data set at the feedback timing based on the host time and the feedback timing information. The local controller 300 generates the command data set based on the feedback data set read at the feedback timing.

The feedback timing information may be information that indirectly specifies the feedback timing. For example, the feedback timing information may be information indicating a feedback reference timing before a timing at which the local controller 300 transmits the feedback data set to the second communication device 400. If the delay time from the feedback reference timing to the feedback timing is defined in advance, the feedback timing is indirectly defined by the feedback reference timing. Specific examples of the feedback reference timing include a timing at which the local controller 300 acquires the feedback data set.

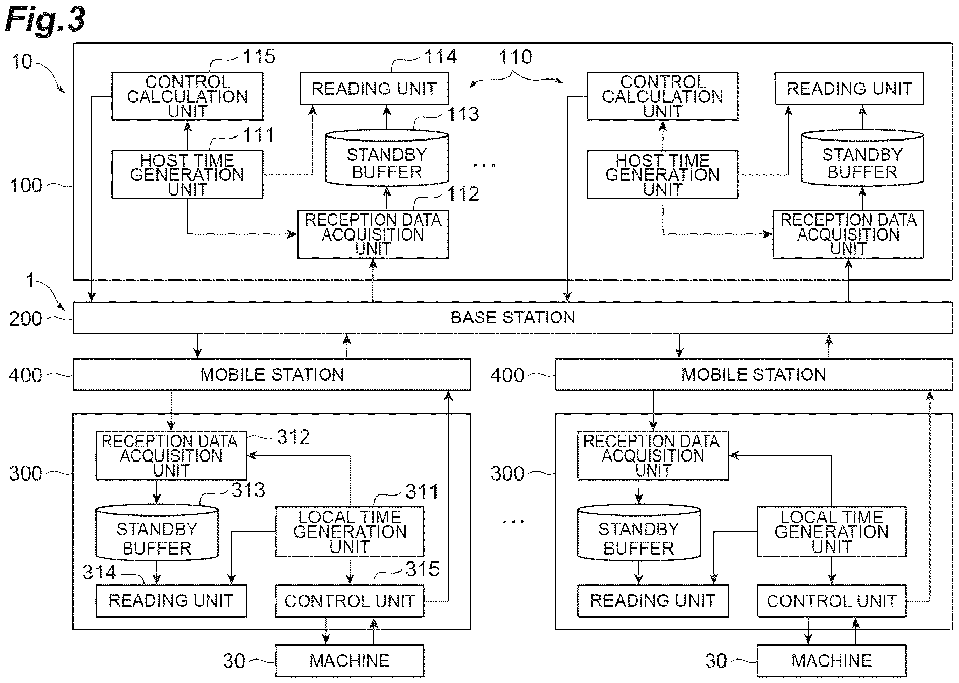

FIG. 3 is a block diagram illustrating an example functional configuration of the controller 100 and the local controller 300. As illustrated in FIG. 3, the controller 100 includes a host time generation unit 111, a reception data acquisition unit 112, a standby buffer 113, a reading unit 114, and a control calculation unit 115 as functional constituent elements (hereinafter referred to as "functional blocks").

The host time generation unit 111 generates the host time. For example, the host time generation unit 111 counts clock pulses and generates the host time based on the count result and the period of the clock pulses. The reception data acquisition unit 112 acquires the feedback data set from the first communication device 200 and stores the feedback data set in the standby buffer 113. When storing the feedback data set in the standby buffer 113, the reception data acquisition unit 112 may convert the feedback timing information into the number of cycles of the host control period from the current time to the feedback timing.

The reading unit 114 reads the feedback data set from the standby buffer 113 at the feedback timing based on the host time and the feedback timing information. For example, when the feedback timing information is converted into the number of cycles of the host control period, the reading unit 114 counts down the feedback timing information every time the host time becomes a multiple of the host control period. Thus, when the feedback timing information becomes zero, the reading unit 114 reads the feedback data set from the standby buffer 113.

The delay time from the transmission of the feedback data set by the local controller 300 to the reception of the feedback data set by the controller 100 may vary. Even when the delay time varies, the received feedback data set is read at the timing defined by the feedback timing information. Accordingly, the feedback data set can be read in synchronization with the host time without being affected by the variations in the delay time.

The control calculation unit 115 generates the command data set based on the feedback data set read by the reading unit 114. For example, the control calculation unit 115 performs a proportional operation, a proportional-integral operation, or a proportional-integral-differential operation on the deviation between the target operation and the operation of the machine 30 indicated by the feedback data set to calculate a command data set indicating a target output (for example, a target torque or a target current).

The control calculation unit 115 generates the command data set in synchronization with the host time. For example, the control calculation unit 115 generates the command data set based on the feedback data set read by the reading unit 114 every time the host time becomes a multiple of the host control period.

The control calculation unit 115 adds the command timing information to the generated command data set. The control calculation unit 115 transmits, to the first communication device 200, the command data set to which the command timing information is added.

When the control system 10 includes a plurality of local controllers 300, the controller 100 may include a plurality of control modules 110 corresponding to the plurality of local controllers 300, respectively. Each of the plurality of control modules 110 includes the host time generation unit 111, the reception data acquisition unit 112, the standby buffer 113, the reading unit 114, and the control calculation unit 115. The controller 100 may be configured so that one host time generation unit 111 is shared by a plurality of control modules 110.

The local controller 300 includes a local time generation unit 311, a reception data acquisition unit 312, a standby buffer 313, a reading unit 314, and a control unit 315 as functional blocks.

The local time generation unit 311 generates the local time synchronized with the host time. For example, the local time generation unit 311 counts clock pulses and generates the local time based on the count result and the period of the clock pulses. The reception data acquisition unit 312 acquires the command data set from the second communication device 400 and stores the command data set in the standby buffer 313. When storing the command data set in the standby buffer 313, the reception data acquisition unit 312 may convert the command timing information into the number of cycles of the local control period from the current time to the command timing.

The reading unit 314 reads the command data set from the standby buffer 313 at the command timing based on the local time and the command timing information. For example, when the command timing information is converted into the number of cycles of the local control period, the reading unit 314 counts down the command timing information every time the local time becomes a multiple of the local control period. Thus, when the command timing information becomes zero, the reading unit 314 reads the command data set from the standby buffer 313.

The delay time from the transmission of the command data set by the controller 100 to the reception of the feedback data set by the local controller 300 may vary. Even when the delay time varies, the received command data set is read at a timing defined by the command timing information. Accordingly, it is possible to read the command data set in synchronization with the local time without being affected by the variation in the delay time.

The control unit 315 controls the machine 30 based on the command data set read by the reading unit 314. For example, the control unit 315 controls the machine 30 with the output corresponding to the target output, and acquires the feedback data set indicating the operation result of the machine 30 from the machine 30.

The control unit 315 adds the feedback timing information to the acquired feedback data set. The control unit 315 transmits, to the second communication device 400, the feedback data set to which feedback timing information is added.

The controller 100 and the local controller 300 are merely an example of the first application and the second application. The first application and the second application may be any applications as long as they communicate with each other through the communication system 1 and perform their respective processing in synchronization with a common time.

In order to cause each of the first application and the second application to perform processing synchronized with a common time, it is necessary to provide information of the first application time from the first application to the second application by the communication system 1. However, since there is a delay from the time when the first application transmits the information of the first application time to the time when the second application receives the information of the first application time, the first application and the second application cannot be synchronized with a common time by only transmitting and receiving the information of the first application time.

Accordingly, it is necessary to perform communication that guarantees time synchronization (communication that compensates for the delay time) between the first application and the first communication device 200, between the first communication device 200 and the second communication device 400, and between the second communication device 400 and the second application. Specific examples of communication that guarantees time synchronization include Time-Sensitive Networking (TSN) communication and the like.

However, for example, there may be a case where the second application does not have a function of performing communication that guarantees time synchronization. Accordingly, the first communication device 200 is configured to acquire the first time from the first application (for example, the controller 100). The second communication device 400 is configured to: generate a second time that is synchronous with the first time; and periodically output an interrupt signal that is synchronous with the second time to the second application (for example, the local controller 300).

According to the communication system 1, even in the second application which does not have a function of performing communication that guarantees time synchronization with the second communication device 400, processing synchronized with the first time acquired from the first application can be performed based on the interrupt signal. Therefore, it is effective for easily synchronizing applications that communicate with each other.

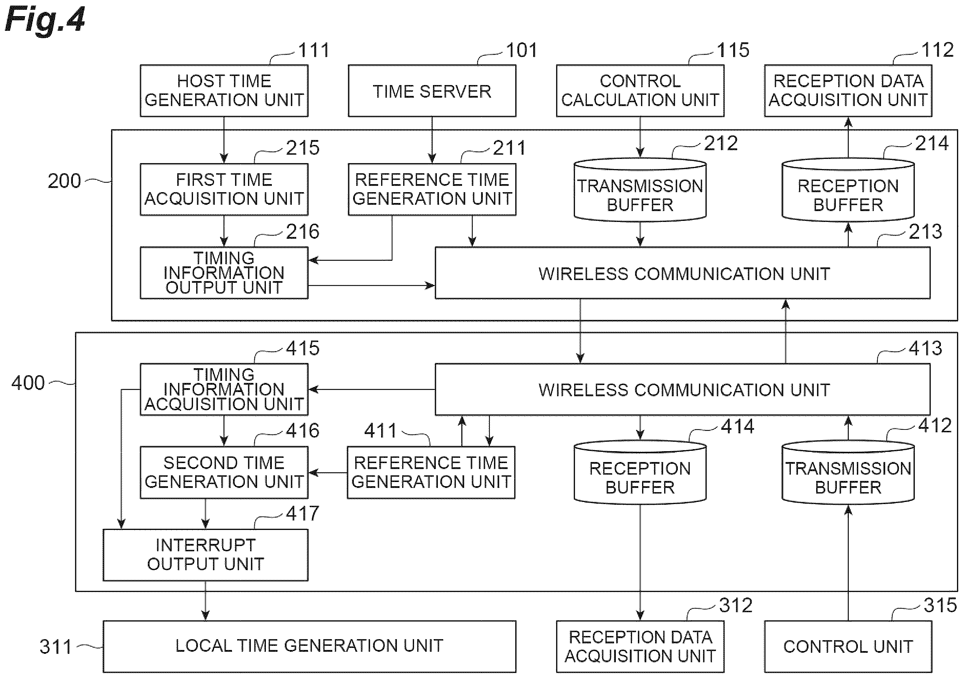

Hereinafter, an example configuration of the first communication device 200 and the second communication device 400 will be described in detail with reference to FIG. 4. The first communication device 200 and the second communication device 400 perform mobile communication as an example of wireless communication. The first communication device 200 is a base station of the mobile communication, and the second communication device 400 is a mobile station of the mobile communication. The first communication device 200 transmits, to the second communication device 400 through wireless communication, a communication packet received from the controller 100 via a communication line 201 (described later), and transmits, to the controller 100 via the communication line 201, a communication packet received from the second communication device 400 through the wireless communication. The second communication device 400 transmits, to the local controller 300 via a communication line 401, a communication packet received from the first communication device 200 by wireless communication, and transmits, to the first communication device 200 through the wireless communication, a communication packet received from the local controller 300 via the communication line 401.

The first communication device 200 and the second communication device 400 may perform wireless communication based on a common communication reference time. For example, the first communication device 200 and the second communication device 400 perform communication by the fifth-generation mobile communication system (5G communication) based on the communication reference time.

The first communication device 200 and the second communication device 400 may perform local mobile communication synchronized with public mobile communication performed by a public base station different from the first communication device 200 based on the communication reference time. Examples of the public mobile communication performed by the public base station include mobile communication performed between a base station of a communication carrier and a mobile communication terminal such as a smartphone.

As an example, the first communication device 200 and the second communication device 400 perform local 5G communication in synchronization with public 5G communication performed by a public base station. For example, the first communication device 200 and the second communication device 400 perform local 5G communication in a time division duplex pattern synchronized with a time division duplex pattern of public 5G communication.

As illustrated in FIG. 4, the first communication device 200 includes a reference time generation unit 211, a transmission buffer 212, a wireless communication unit 213, a reception buffer 214, a first time acquisition unit 215, and a timing information output unit 216 as functional blocks. The reference time generation unit 211 generates a base station time (communication reference time). For example, the reference time generation unit 211 acquires the global time from a time server 101 by TSN communication or the like, and generates the base station time synchronized with the global time. The global time is a time with which the public mobile communication is synchronized. For example, the global time is a time with which the time division duplex pattern of the public 5G communication is synchronized. Since the reference time generation unit 211 generates the base station time synchronized with the global time, the local 5G communication synchronized with the public 5G communication can be performed.

The transmission buffer 212 temporarily stores the command data set transmitted from the control calculation unit 115 of the controller 100. The wireless communication unit 213 reads the command data set from the transmission buffer 212 and transmits the read command data set to the second communication device 400 through wireless communication. In addition, the wireless communication unit 213 receives the feedback data set from the second communication device 400 through wireless communication. The wireless communication unit 213 transmits the command data set and receives the feedback data set through wireless communication in synchronization with the base station time generated by the reference time generation unit 211. The reception buffer 214 temporarily stores the feedback data set received by the wireless communication unit 213. The reception data acquisition unit 112 of the controller 100 acquires the feedback data set from the reception buffer 214.

The first time acquisition unit 215 acquires the first time from the first application. For example, the first time acquisition unit 215 acquires the first time synchronized with the host time from the host time generation unit 111 by TSN communication or the like. The timing information output unit 216 calculates a time difference between the first time acquired by the first time acquisition unit 215 and the base station time generated by the reference time generation unit 211, and transmits time difference information indicating the calculated time difference to the second communication device 400 by the host time generation unit 111.

The first time acquisition unit 215 may further acquire, from the first application, interrupt timing information indicating a relationship between the first time and the output timing of the interrupt signal. For example, the first time acquisition unit 215 acquires interrupt timing information from the host time generation unit 111. The interrupt timing information may include the output start timing of the interrupt signal and the output period of the interrupt signal. The timing information output unit 216 causes the interrupt timing information acquired by the first time acquisition unit 215 to be transmitted to the second communication device 400 by the wireless communication unit 213.

The second communication device 400 includes a reference time generation unit 411, a transmission buffer 412, a wireless communication unit 413, a reception buffer 414, a timing information acquisition unit 415, a second time generation unit 416, and an interrupt output unit 417 as functional blocks. The reference time generation unit 411 generates a mobile station time synchronized with the base station time.

The transmission buffer 412 temporarily stores the feedback data set transmitted from the control unit 315 of the local controller 300. The wireless communication unit 413 reads the feedback data set from the transmission buffer 412 and transmits the read feedback data set to the wireless communication unit 213 of the first communication device 200 through wireless communication. In addition, the wireless communication unit 413 receives the command data set from the wireless communication unit 213 through wireless communication. The wireless communication unit 413 transmits the feedback data set and receives the command data set through wireless communication in synchronization with the mobile station time generated by the reference time generation unit 411. The reception buffer 414 temporarily stores the command data set received by the wireless communication unit 413. The reception data acquisition unit 312 of the local controller 300 acquires the command data set from the reception buffer 414.

The above-described reference time generation unit 411 acquires the base station time from the reference time generation unit 211 by TSN communication or the like through wireless communication using the wireless communication unit 213 and the wireless communication unit 413, and generates a mobile station time synchronized with the base station time.

The timing information acquisition unit 415 acquires the time difference information and the interrupt timing information received by the wireless communication unit 413 from the wireless communication unit 213. The second time generation unit 416 generates a second time synchronized with the first time. For example, the second time generation unit 416 generates the second time based on the time difference information acquired by the timing information acquisition unit 415 and the mobile station time generated by the reference time generation unit 411. For example, the second time generation unit 416 generates the second time by shifting the mobile station time by the time difference indicated by the time difference information.

The interrupt output unit 417 periodically outputs an interrupt signal synchronized with the second time to the local controller 300. The interrupt output unit 417 may output the interrupt signal to the second application so that the relationship between the second time and the output timing is the relationship indicated by the interrupt timing information. As described above, the interrupt timing information may include the output start timing and the output period. In this case, the interrupt output unit 417 may output the interrupt signal to the local controller 300 based on the second time every time the elapsed time from the output start timing becomes a multiple of the output period.

The local controller 300 may control the machine 30 at a timing based on the interrupt signal. As described above, the interrupt signal is output in synchronization with the second time. The second time is generated so as to be synchronized with the first time. Accordingly, even in the local controller 300 that does not have a function of performing communication that guarantees time synchronization with the second communication device 400, the machine 30 can be controlled in synchronization with the first time acquired from the controller 100 by controlling the machine 30 at a timing based on the interrupt signal.

The interrupt output unit 417 may output an interrupt signal to the local controller 300 via an interrupt line 402 (described later) provided separately from the communication line 401 (described later). The interrupt output unit 417 may transmit an interrupt packet including an interrupt signal to the local controller 300 via the communication line 401.

The interrupt output unit 417 may preferentially transmit the interrupt packet to the local controller 300 over the communication packet transmitted from the reception buffer 414 to the local controller 300 via the communication line 401. For example, the interrupt output unit 417 may suspend the transmission of the communication packet from the reception buffer 414 to the local controller 300 at the output timing of the interrupt signal, and transmit the interrupt packet to the local controller 300.

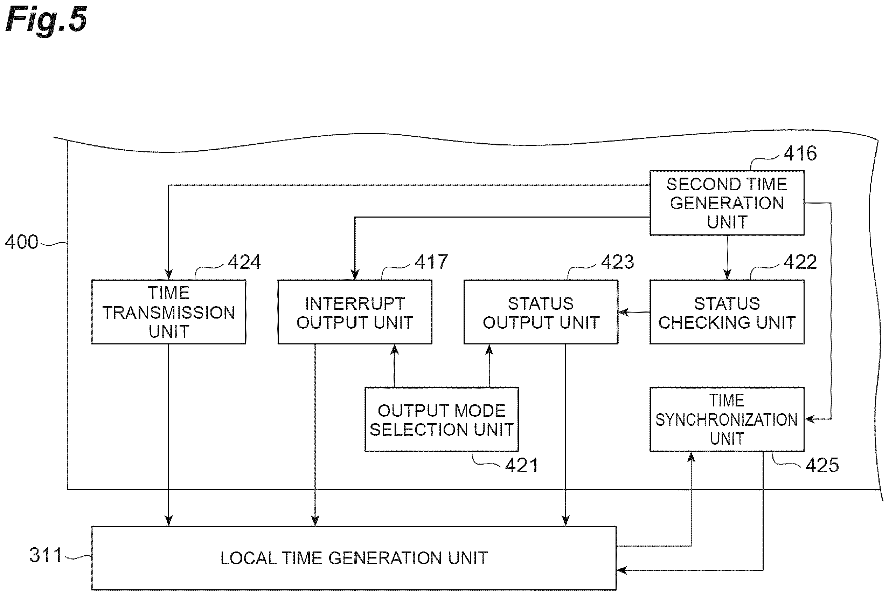

The interrupt output unit 417 may be configured to perform both a dedicated output mode in which the interrupt signal is output via the interrupt line 402 and a packet output mode in which the interrupt packet is transmitted via the communication line 401. As illustrated in FIG. 5, the second communication device 400 may further include an output mode selection unit 421. The output mode selection unit 421 selects one of the dedicated output mode in which the interrupt signal is output via the interrupt line 402 and the packet output mode in which the interrupt packet is transmitted via the communication line 401 based on a user input to a user interface 396 (described later) or the like.

When the output mode selection unit 421 selects the dedicated output mode, the interrupt output unit 417 outputs the interrupt signal to the local controller 300 via the interrupt line 402 without transmitting the interrupt packet. When the output mode selection unit 421 selects the packet output mode, the interrupt output unit 417 transmits the interrupt packet to the local controller 300 via the communication line 401 without outputting the interrupt signal via the interrupt line 402.

The second communication device 400 may further include a time transmission unit 424. The time transmission unit 424 transmits, to the local controller 300, time information indicating the second time. In this case, the local controller 300 may generate a local time synchronized with the second time based on the time information and the interrupt signal, and control the machine 30 at a timing based on the local time.

As an example, the time transmission unit 424 transmits, to the local time generation unit 311 via the communication line 401, time information indicating the second time at the timing when the interrupt output unit 417 outputs the interrupt signal. The local time generation unit 311 generates (corrects) the local time so as to coincide with the second time indicated by the time information at the time when the output of the interrupt signal is detected. According to the configuration in which the local time is synchronized with the second time, the machine 30 can be controlled in synchronization with the second time in a control cycle shorter than the output cycle of the interrupt signal.

The second communication device 400 may be configured to output, to the local controller 300, synchronization status information indicating the synchronization state of the second time with respect to the first time. For example, the second communication device 400 may further include a status checking unit 422 and a status output unit 423. The status checking unit 422 checks the synchronization state of the second time with respect to the first time. For example, the status checking unit 422 checks whether the second time is synchronized with the first time based on whether the generation of the second time by the second time generation unit 416 is successful.

For example, the status checking unit 422 sets the checking result of the synchronization state to "synchronized" when the generation of the second time by the second time generation unit 416 is successful, and sets the checking result of the synchronization state to "unsynchronized" when the generation of the second time by the second time generation unit 416 is successful. Examples of cases where the generation of the second time by the second time generation unit 416 is unsuccessful include a case where the timing information acquisition unit 415 cannot acquire the time difference information due to packet loss or the like in wireless communication.

The synchronization state may be a synchronization level indicating the accuracy of synchronization. For example, the status checking unit 422 may evaluate the synchronization level based on the elapsed time after the successful generation of the second time by the second time generation unit 416. For example, the status checking unit 422 may set the synchronization level to the highest level immediately after the successful generation of the second time by the second time generation unit 416, and gradually lower the synchronization level with the passage of time until the generation of the second time by the second time generation unit 416 is successful next time.

The status output unit 423 may output, to the local controller 300, synchronization status information indicating the synchronization state confirmed by the status checking unit 422. The status output unit 423 may output the synchronization status information to the local controller 300 via a status output line 403 (described later) provided separately from the communication line 401 (described later) and the interrupt line 402 (described later). When the interrupt output unit 417 transmits the interrupt packet via the communication line 401, the status output unit 423 may include the synchronization status information in the interrupt packet. Accordingly, the synchronization status information is transmitted via the communication line 401 to the local controller 300.

The second communication device 400 may further include a time synchronization unit 425. The time synchronization unit 425 generates, in the local controller 300, a local time synchronized with the second time based on the communication delay time between the second communication device 400 and the local controller 300 when the local controller 300 has a function of performing communication that guarantees time synchronization. For example, the time synchronization unit 425 calculates the corrected second time by correcting the second time using the communication delay time, and transmits the corrected second time to the local time generation unit 311. The local time generation unit 311 generates a local time synchronized with the second time based on the corrected second time.

### Hardware Configuration

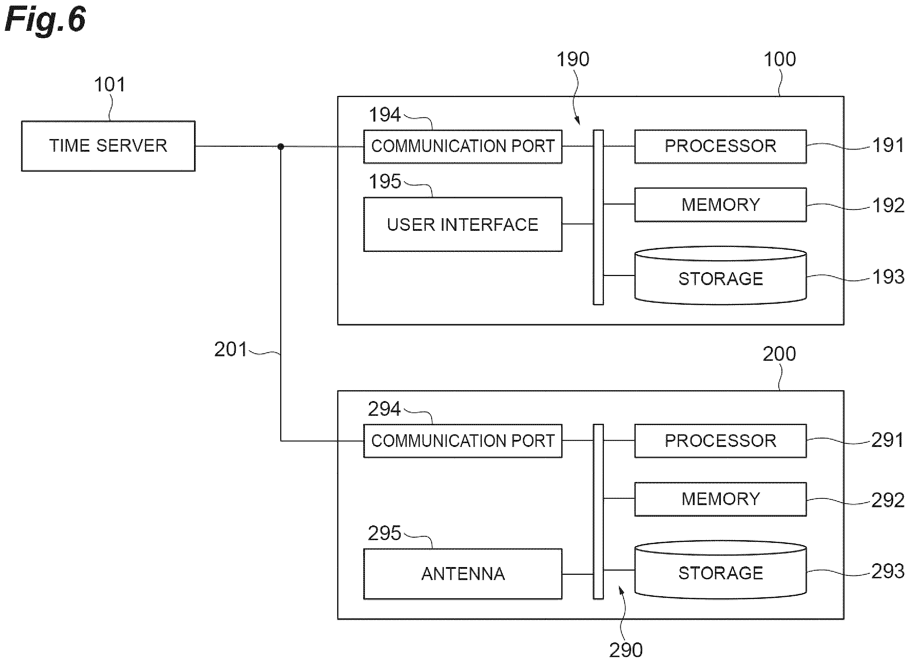

FIG. 6 is a block diagram illustrating an example hardware configuration of the controller 100 and the first communication device 200. As illustrated in FIG. 6, the controller 100 includes circuitry 190. The circuitry 190 includes a processor 191, a memory 192, storage 193, a communication port 194, and a user interface 195.

The storage 193 is a nonvolatile storage medium. Specific examples of the storage 193 include a hard disk and a flash memory. The storage 193 may be a portable storage medium such as an optical disc. The storage 193 stores a program for configuring the above-described functional blocks in the controller 100.

The memory 192 is a temporary memory such as a random-access memory, and temporarily stores the program loaded from the storage 193. The processor 191 is configured by one or more arithmetic elements, and causes the controller 100 to configure each of the functional blocks by executing the program loaded in the memory 192. The communication port 194 communicates with the first communication device 200 in response to a request from the processor 191.

The user interface 195 is an apparatus that receives an input from a user and presents information to the user, and includes, for example, an input device and a display device. Examples of the input device include a keyboard, a mouse, and a keypad. Examples of the display device include a liquid crystal monitor and an organic electro-luminescence (EL) monitor. The input device may be integrated with the display device as a so-called touch panel.

The first communication device 200 includes circuitry 290. The circuitry 290 includes a processor 291, a memory 292, storage 293, and a communication port 294.

The storage 293 is a nonvolatile storage medium. Specific examples of the storage 193 include a hard disk and a flash memory. The storage 193 may be a portable storage medium such as an optical disc. The storage 293 stores a program for configuring the above-described functional blocks in the first communication device 200.

The memory 292 is a temporary memory such as a random-access memory, and temporarily stores the program loaded from the storage 293. The processor 291 is configured by one or more arithmetic elements, and causes the first communication device 200 to configure each of the functional blocks by executing the program loaded in the memory 292. The communication port 294 communicates with the communication port 194 via the communication line 201 in response to a request from the processor 291. An antenna 295 transmits and receives a signal for wireless communication to and from the second communication device 400 in response to a request from the processor 291.

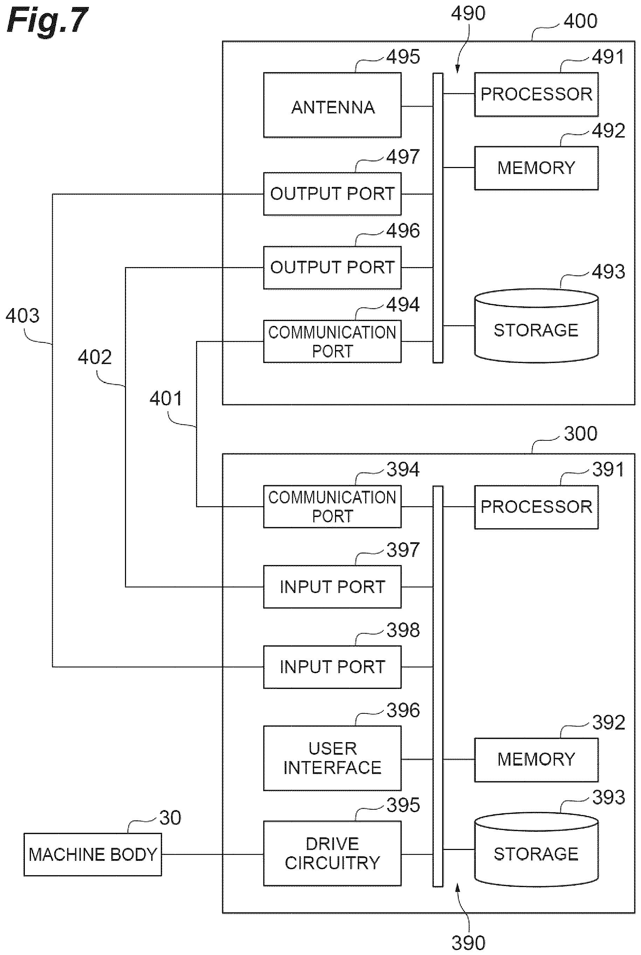

FIG. 7 is a block diagram illustrating an example hardware configuration of the local controller 300 and the second communication device 400. As illustrated in FIG. 7, the local controller 300 includes circuitry 390. The circuitry 390 includes a processor 391, a memory 392, storage 393, a communication port 394, drive circuitry 395, the user interface 396, an input port 397, and an input port 398.

The storage 393 is a nonvolatile storage medium. Specific examples of the storage 393 include a hard disk and a flash memory. The storage 393 may be a portable storage medium such as an optical disc. The storage 393 stores a program for configuring the above-described functional blocks in the local controller 300.

The memory 392 is a temporary memory such as a random-access memory, and temporarily stores the program loaded from the storage 393. The processor 391 is configured by one or more arithmetic elements, and causes the local controller 300 to configure each of the functional blocks by executing the program loaded in the memory 392. The communication port 394 communicates with the second communication device 400 in response to a request from the processor 391.

The drive circuitry 395 outputs driving power to the machine 30 in response to a request from the processor 391, and acquires the feedback data set from the machine 30.

The user interface 396 is a device that receives an input from a user and presents information to the user, and includes, for example, an input device and a display device. Examples of the input device include a keyboard, a mouse, and a keypad. Examples of the display device include a liquid crystal monitor and an organic electro-luminescence (EL) monitor. The input device may be integrated with the display device as a so-called touch panel.

The input port 397 acquires the interrupt signal output by the second communication device 400 via the interrupt line 402 and notifies the processor 391 of the acquisition of the interrupt signal. The input port 398 acquires the status information output by the second communication device 400 via the status output line 403, and notifies the processor 391 of the acquired status information.

The second communication device 400 includes circuitry 490. The circuitry 490 includes a processor 491, a memory 492, storage 493, a communication port 494, an antenna 495, an output port 496, and an output port 497.

The storage 493 is a nonvolatile storage medium. Specific examples of the storage 493 include a hard disk and a flash memory. The storage 193 may be a portable storage medium such as an optical disc. The storage 493 stores a program for configuring the above-described functional blocks in the second communication device 400.

The memory 492 is a temporary memory such as a random-access memory, and temporarily stores the program loaded from the storage 493. The processor 491 is configured by one or more arithmetic elements, and causes the second communication device 400 to configure each of the functional blocks by executing the program loaded in the memory 492. The communication port 494 communicates with the communication port 494 in response to a request from the processor 491. The antenna 495 transmits and receives a signal for wireless communication in response to a request from the processor 491.

The output port 496 outputs the interrupt signal to the local controller 300 via the interrupt line 402 different from the communication line 401 in response to a request from the processor 491. The output port 497 outputs the status information to the local controller 300 via the status output line 403 different from the communication line 401 and the interrupt line 402 in response to the request from the processor 491. The hardware configuration described above is merely an example and can be modified as appropriate.

### Communication Procedure

As an example of the communication method, an example communication procedure performed by the communication system 1 will be described in detail. This procedure includes: performing wireless communication with the first communication device 200; transmitting, to the local controller 300 through second wired communication, information acquired from the first communication device 200 by wireless communication; generating a second time synchronized with a first time acquired from the controller 100 by the first communication device 200; and periodically outputting an interrupt signal synchronized with the second time to the local controller 300. Hereinafter, this procedure will be described in detail by being divided into a correction procedure of the communication reference time, a synchronization procedure of the second time, and an interrupt output procedure.

### Synchronization Procedure of Communication Reference Time

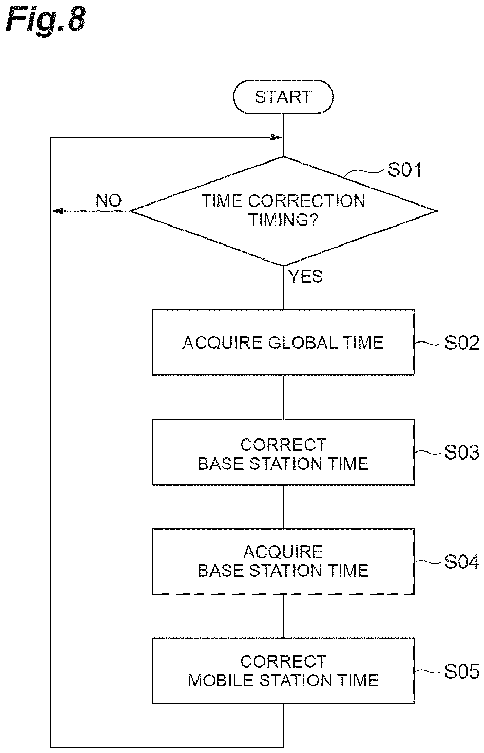

As illustrated in FIG. 8, the communication system 1 performs steps S01, S02, S03, S04, S05. In the step S01, the reference time generation unit 211 waits for the time correction timing based on the base station time. For example, the reference time generation unit 211 waits for the base station time to become a multiple of a predetermined time correction period.

In the step S02, the reference time generation unit 211 acquires the global time from the time server 101 by TSN communication or the like. In the step S03, the reference time generation unit 211 corrects the base station time so as to synchronize with the acquired global time. In the step S04, the reference time generation unit 411 acquires the base station time from the reference time generation unit 211 by TSN communication or the like. In the step S05, the reference time generation unit 411 corrects the mobile station time so as to synchronize with the acquired base station time. The communication system 1 then returns the processing to the step S01. The communication system 1 repeatedly performs the above procedure.

### Second Time Synchronization Procedure

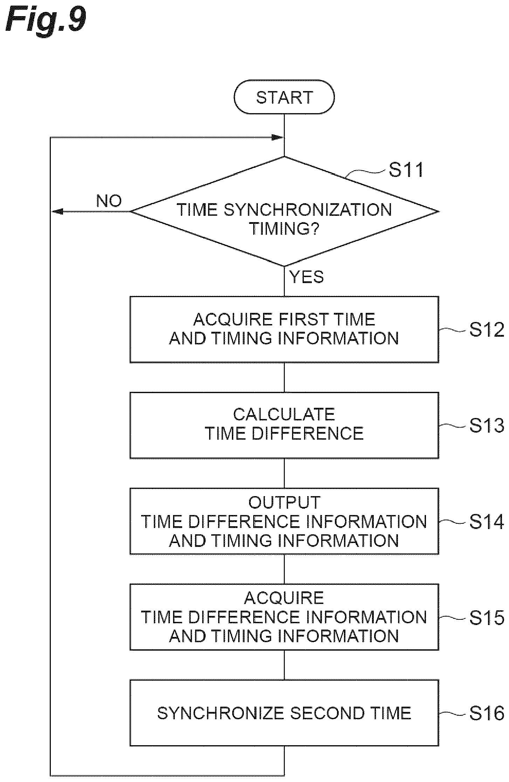

As illustrated in FIG. 9, the communication system 1 performs steps S11, S12, S13, S14, S15, S16. In the step S 11, the reference time generation unit 211 waits for the time synchronization timing based on the base station time. For example, the reference time generation unit 211 waits for the base station time to become a multiple of a predetermined time synchronization period.

In the step S12, the first time acquisition unit 215 acquires the first time synchronized with the host time from the host time generation unit 111 by TSN communication or the like. In addition, the first time acquisition unit 215 further acquires the interrupt timing information indicating the relationship between the first time and the output timing of the interrupt signal from the first application.

In the step S13, the timing information output unit 216 calculates the time difference between the first time acquired by the first time acquisition unit 215 and the base station time generated by the reference time generation unit 211. In the step S 14, the timing information output unit 216 causes the wireless communication unit 213 to transmit, to the wireless communication unit 413, the time difference information indicating the calculated time difference and the interrupt timing information.

In the step S15, the timing information acquisition unit 415 acquires the time difference information and interrupt timing information received by the wireless communication unit 413 from the wireless communication unit 213. In the step S16, the second time generation unit 416 synchronizes the second time with the first time based on the time difference information acquired by the timing information acquisition unit 415 and the mobile station time generated by the reference time generation unit 411. The communication system 1 repeatedly performs the above procedure.

### Interrupt Output Procedure

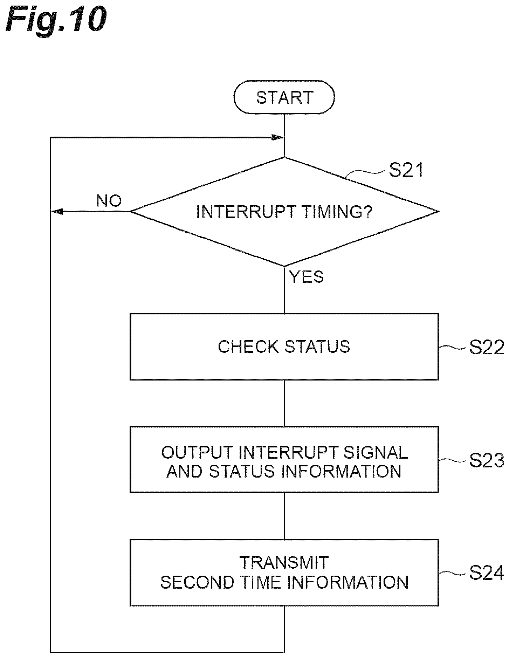

As illustrated in FIG. 10, the communication system 1 performs steps S21, S22, S23, S24. In the step S21, the interrupt output unit 417 waits for the output timing of the interrupt signal based on the second time and the interrupt timing information. For example, the interrupt output unit 417 waits for a timing at which the elapsed time from the output start timing becomes a multiple of the output period based on the second time.

In the step S22, the status checking unit 422 checks the synchronization state of the second time with respect to the first time. In the step S23, the interrupt output unit 417 outputs the interrupt signal to the local controller 300, and the status output unit 423 outputs the status information to the local controller 300. In the step S24, the time transmission unit 424 sends the time information indicating the second time to the local controller 300. For example, the time transmission unit 424 transmits, to the local controller 300, time information indicating the second time at the timing at which the interrupt output unit 417 outputs the interrupt signal. The communication system 1 then returns the processing to the step S21. The communication system 1 repeats the above procedure.

In the above description, the procedure in which the time information indicating the second time at the timing of outputting of the interrupt signal is transmitted after the output of the interrupt signal has been described, but the procedure is not limited thereto. The time information indicating the second time at a scheduled timing at which the interrupt signal is output may be transmitted before the interrupt signal is output.

### Control Procedure

As an example of the control method, a control procedure including a communication procedure by the communication system 1 will be described in detail. Hereinafter, the control procedure will be divided into a local time synchronization procedure performed by the local controller 300, a host control procedure performed by the controller 100, and a local control procedure performed by the local controller 300, and will be described in detail.

### Synchronization Procedure of Local Time

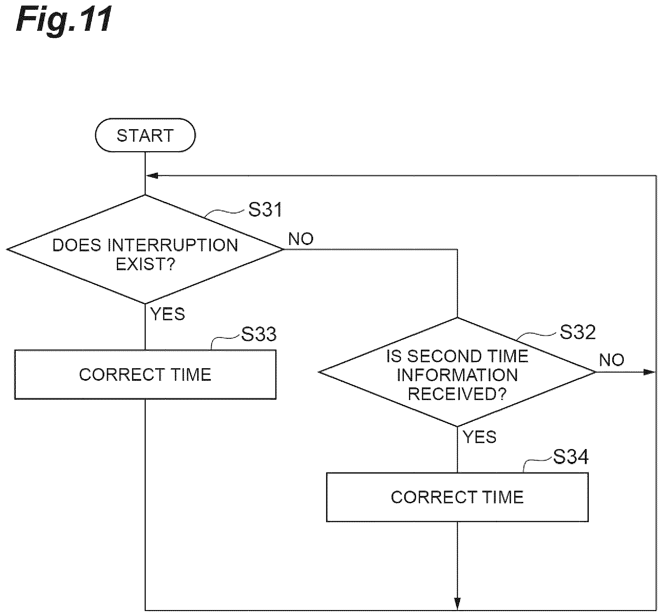

As illustrated in FIG. 11, the local controller 300 performs a step S31. In the step S31, the local time generation unit 311 checks whether the interrupt signal is output by the interrupt output unit 417. If it is determined in the step S31 that the interrupt signal is not output, the local controller 300 performs a step S32. In the step S32, the local time generation unit 311 checks whether the time information transmitted from the time transmission unit 424 is received. If it is determined in the step S32 that the time information is not received, the local controller 300 returns the processing to the step S31.

If it is determined in the step S31 that the interrupt signal is output, the local controller 300 performs a step S33. In the step S33, the local time generation unit 311 corrects the local time based on the interrupt signal. For example, the local time generation unit 311 corrects the local time so that a time point at which the output of the interrupt signal is scheduled is matched with a time point at which the output of the interrupt signal is actually detected.

If it is determined in the step S32 that the time information is received, the local controller 300 performs a step S34. In the step S34, the local time is corrected so that a time point at which the output of the interrupt signal is scheduled is matched with the second time indicated by the time information.

After the steps S33, S34, the local controller 300 returns the processing to the step S31. The local controller 300 repeatedly performs the above procedure. Note that after the local time is synchronized with the second time by the steps S33, S34, the synchronization of the local time with the second time can be maintained only by repeating the step S33. For this reason, it is not necessary for the second communication device 400 to transmit time information each time an interrupt signal is output.

### Host Control Procedure

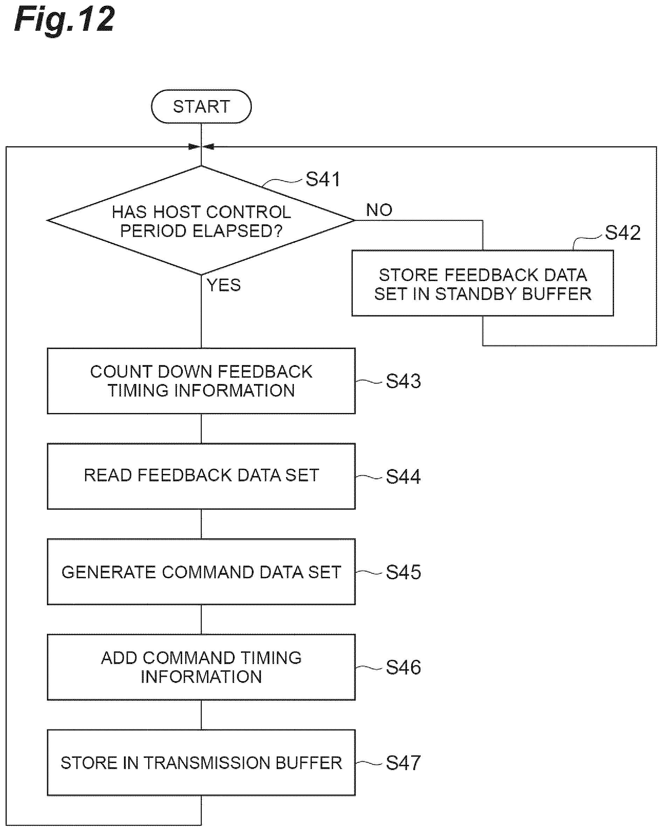

As illustrated in FIG. 12, the controller 100 performs a step S41. In the step S41, the reading unit 114 checks whether the host time is a multiple of the host control period.

If it is determined in the step S41 that the host time is not a multiple of the host control period, the controller 100 performs a step S42. In the step S42, the reception data acquisition unit 112 acquires the feedback data set from the reception buffer 214, and converts the feedback timing information into the number of cycles of the host control period from the current time to the feedback timing. The reception data acquisition unit 112 stores, in the standby buffer 113, the feedback data set including the feedback timing information converted into the number of cycles. The controller 100 then returns the processing to the step S41.

If it is determined in the step S41 that the host time is a multiple of the host control period, the controller 100 performs steps S43, S44, S45, S46, S47. In the step S43, the reading unit 114 counts down the feedback timing information in all the feedback data sets stored in the standby buffer 113.

In the step S44, the reading unit 114 reads, from the standby buffer 113, the feedback data set in which the feedback timing information is zero. In the step S45, the control calculation unit 115 generates the command data set based on the feedback data set read by the reading unit 114.

In the step S46, the control calculation unit 115 adds the command timing information to the generated command data set. In the step S47, the control calculation unit 115 stores, in the transmission buffer 212, the command data set to which the command timing information is added. The command data set stored in the transmission buffer 212 is transmitted to the wireless communication unit 413 by the wireless communication unit 213. After the step S47, the controller 100 returns the processing to the step S41. The controller 100 repeats the above procedure.

### Local Control Procedure

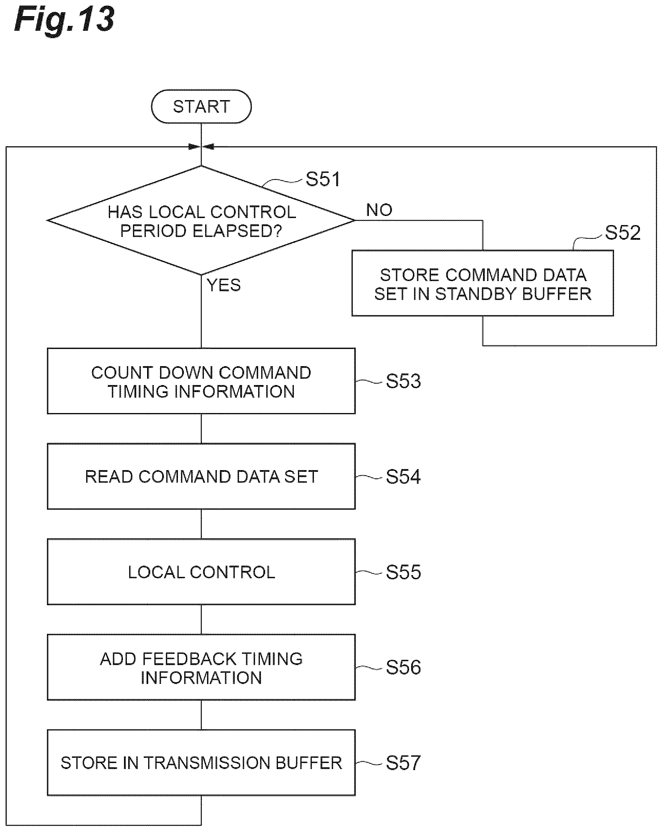

As illustrated in FIG. 13, the local controller 300 performs a step S51. In the step S51, the reading unit 314 checks whether the local time is a multiple of the local control period.

If it is determined in the step S51 that the local time is not a multiple of the local control period, the local controller 300 performs a step S52. In the step S52, the reception data acquisition unit 312 acquires the command data set from the reception buffer 414, and converts the command timing information into the number of cycles of the local control period from the current time to the command timing. The reception data acquisition unit 312 stores, in the standby buffer 313, the command data set including the command timing information converted into the number of cycles. The local controller 300 then returns the processing to the step S51.

If it is determined in the step S51 that the local time is a multiple of the local control period, the local controller 300 performs steps S53, S54, S55, S56, S57. In the step S53, the reading unit 314 counts down the command timing information in all the command data sets stored in the standby buffer 313.

In the step S54, the reading unit 314 reads, from the standby buffer 313, the command data set in which the command timing information is zero. In the step S55, the control unit 315 controls the machine 30 based on the command data set read by the reading unit 314, and acquires the feedback data set from the machine 30.

In the step S56, the control unit 315 adds the feedback timing information to the acquired feedback data set. In the step S57, the control unit 315 stores, in the transmission buffer 412, the feedback data set to which the feedback timing information is added. The feedback data set stored in the transmission buffer 412 is transmitted to the wireless communication unit 213 by the wireless communication unit 413. After the step S57, the local controller 300 returns the processing to the step S51. The local controller 300 repeats the above procedure.

### Summary

As described above, the communication system 1 is a system configured to perform wireless communication between the first application and the second application, and includes: the first communication device 200 configured to perform the first wired communication with the first application; and the second communication device 400 configured to perform the second wired communication with the second application and to perform the wireless communication with the first communication device 200. The first communication device 200 includes the first time acquisition unit 215 configured to acquire the first time from the first application. The second communication device 400 includes: the second time generation unit 416 configured to generate the second time synchronized with the first time; and the interrupt output unit 417 configured to periodically output, to the second application, an interrupt signal synchronized with the second time.

According to the communication system 1, even in the second application that does not have a function of performing communication that guarantees time synchronization with the second communication device 400, it is possible to perform processing synchronized with the first time acquired from the first application based on the interrupt signal. Accordingly, it is effective to easily synchronize applications that communicate with each other.

The second communication device 400 may further include the status output unit 423 configured to output, to the second application, the synchronization status information indicating the synchronization state of the second time with respect to the first time. Based on the synchronization status information, it is possible to improve the reliability of synchronization between applications.

The first time acquisition unit 215 may be further configured to acquire, from the first application, timing information indicating a relationship between the first time and the output timing of the interrupt signal, and the interrupt output unit 417 may be configured to output the interrupt signal to the second application so that the relationship between the second time and the output timing matches the relationship indicated by the timing information. The output timing of the interrupt signal can be easily adjusted.

The second communication device 400 may further include the time transmission unit 424 configured to transmit, to the second application, the time information indicating the second time. Even in the second application that does not have a function of performing communication that guarantees the synchronization of the time with the second communication device 400, it is possible to generate a time synchronized with the second time by correcting the second time based on the interrupt signal.

The second communication device 400 may further include the time synchronization unit 425 configured to generate, in the second application, the second application time synchronized with the second time based on the communication delay time between the second communication device 400 and the second application. It can also be applied to a second application having a function of performing communication that guarantees time synchronization with the second communication device 400.

The second communication device 400 may be configured to transmit, to the second application via the communication line, the communication packet acquired from the first communication device 200 through the wireless communication, and the interrupt output unit 417 may be configured to output the interrupt signal to the second application via an interrupt line provided separately from the communication line. The interrupt signal may be output to the second application in a timely manner.

The second communication device 400 may be configured to transmit, to the second application via the communication line, the communication packet acquired from the first communication device 200 through the wireless communication, and the interrupt output unit 417 may be configured to transmit the interrupt packet including the interrupt signal to the second application via the communication line. The interrupt signal can be output to the second application without providing an interrupt line different from the communication line.

The interrupt output unit 417 may be configured to transmit the interrupt packet to the second application with higher priority than the communication packet. In a configuration in which the interrupt signal is output by transmission of the interrupt packet, the interrupt signal can be output to the second application in a more timely manner.

The system may further include the reference time generation unit 211 configured to generate the communication reference time, and the first communication device 200 and the second communication device 400 may perform the wireless communication based on the communication reference time. The timing of wireless communication may be appropriately adjusted independently of the first time and the second time.

The first communication device 200 and the second communication device 400 may be configured to perform mobile communication, the first communication device 200 may be a base station of mobile communication, and the second communication device 400 may be a mobile station of mobile communication. The versatility of synchronous communication can be further improved.

The first communication device 200 and the second communication device 400 may be configured to perform, based on the communication reference time, local mobile communication synchronized with public mobile communication performed by a public base station different from the first communication device 200. The reliability of wireless communication performed by the first communication device 200 and the second communication device 400 can be improved.

The system may further include: the controller configured to perform the first wired communication with the first communication device 200 as the first application; and the local controller configured to perform the second wired communication with the second communication device 400 as the second application and to control the local apparatus based on the command data transmitted from the controller through the wireless communication. The local controller may be configured to control the local apparatus at a timing based on the interrupt signal. The interrupt signal can be effectively used for synchronous communication of the command data between the controller and the local controller.

The second communication device 400 may further include the time transmission unit 424 configured to transmit, to the second application, time information indicating a second time, and the local controller may be configured to generate the local time synchronized with the second time based on the time information and the interrupt signal, and to control the local apparatus at a timing based on the local time. The local apparatus can be controlled in synchronization with the second time at a control cycle shorter than the output cycle of the interrupt signal.

The second communication device 400 is a device configured to perform wireless communication with the first communication device 200 (partner device) configured to perform first wired communication with a first application, and to transmit, to a second application through second wired communication, information acquired from the first communication device 200 through wireless communication. The second communication device 400 includes: the second time generation unit 416 configured to generate the second time synchronized with the first time acquired by the first communication device 200 from the first application, and the interrupt output unit 417 configured to periodically output, to the second application, the interrupt signal synchronized with the second time.

Although the embodiments have been described above, the present disclosure is not necessarily limited to the above-described embodiments, and various modifications can be made without departing from the scope of the present disclosure.

### Reference Signs List

1: communication system; 200: first communication device; 211: reference time generation unit; 215: first time acquisition unit; 400: second communication device; 416: second time generation unit; 417: interrupt output unit; 423: status output unit; 424: time transmission unit; 425: time synchronization unit.

## Claims

1. A communication system configured to perform wireless communication between a first application and a second application, the system comprising:
a first communication device configured to perform first wired communication with the first application; and
a second communication device configured to perform second wired communication with the second application and to perform the wireless communication with the first communication device,
wherein the first communication device comprises:
a first time acquisition unit configured to acquire a first time from the first application; and
wherein the second communication device comprises:
a second time generation unit configured to generate a second time synchronized with the first time; and
an interrupt output unit configured to periodically output, to the second application, an interrupt signal synchronized with the second time.

2. The communication system according to claim 1, wherein the second communication device further comprises:
a status output unit configured to output, to the second application, synchronization status information indicating a synchronization state of the second time with respect to the first time.

3. The communication system according to claim 1 or 2, wherein the first time acquisition unit is further configured to acquire, from the first application, timing information indicating a relationship between the first time and an output timing of the interrupt signal, and
wherein the interrupt output unit is configured to output the interrupt signal to the second application so that a relationship between the second time and the output timing matches a relationship indicated by the timing information.

4. The communication system according to any one of claims 1 to 3, wherein the second communication device further comprises:
a time transmission unit configured to transmit, to the second application, time information indicating the second time.

5. The communication system according to any one of claims 1 to 4, wherein the second communication device further comprises:
a time synchronization unit configured to generate, in the second application, a second application time synchronized with the second time based on a communication delay time between the second communication device and the second application.

6. The communication system according to any one of claims 1 to 5, wherein the second communication device is configured to transmit, to the second application via a communication line, a communication packet acquired from the first communication device through the wireless communication, and
wherein the interrupt output unit is configured to output the interrupt signal to the second application via an interrupt line provided separately from the communication line.

7. The communication system according to any one of claims 1 to 6, wherein the second communication device is configured to transmit, to the second application via a communication line, a communication packet acquired from the first communication device through the wireless communication, and
wherein the interrupt output unit is configured to transmit an interrupt packet including the interrupt signal to the second application via the communication line.

8. The communication system according to claim 7, wherein the interrupt output unit is configured to transmit the interrupt packet to the second application with higher priority than the communication packet.

9. The communication system according to any one of claims 1 to 8, further comprising:
a reference time generation unit configured to generate a communication reference time,
wherein the first communication device and the second communication device perform the wireless communication based on the communication reference time.

10. The communication system according to claim 9, wherein the first communication device and the second communication device are configured to perform mobile communication,
wherein the first communication device is a base station of the mobile communication, and
wherein the second communication device is a mobile station of the mobile communication.

11. The communication system according to claim 10, wherein the first communication device and the second communication device are configured to perform, based on the communication reference time, local mobile communication synchronized with public mobile communication performed by a public base station different from the first communication device.

12. The communication system according to any one of claims 1 to 3, further comprising:
a controller configured to perform, as the first application, the first wired communication with the first communication device; and
a local controller configured to perform, as the second application, the second wired communication with the second communication device and to control a local apparatus based on command data transmitted from the controller through the wireless communication, and
wherein the local controller is configured to control the local apparatus at a timing based on the interrupt signal.

13. The communication system according to claim 12, wherein the second communication device further comprises:
a time transmission unit configured to transmit, to the second application, time information indicating the second time, and
wherein the local controller is configured to generate a local time synchronized with the second time based on the time information and the interrupt signal, and to control the local apparatus at a timing based on the local time.

14. A device configured to perform wireless communication with a partner device configured to perform first wired communication with a first application, and to transmit, to a second application through second wired communication, information acquired from the partner device through the wireless communication, the device comprising:
a second time generation unit configured to generate a second time synchronized with a first time acquired by the partner device from the first application; and
an interrupt output unit configured to periodically output, to the second application, an interrupt signal synchronized with the second time.

15. A communication method comprising:
performing wireless communication with a partner device configured to perform first wired communication with a first application;
transmitting, to a second application through second wired communication, information acquired from the partner device through the wireless communication;
generating a second time synchronized with a first time acquired from the first application by the partner device; and
periodically outputting, to the second application, an interrupt signal synchronized with the second time.
